# EUROPÄISCHE PATENTSCHRIFT

(11) **EP 0 355 310 B1**
(45) Veröffentlichungstag und Bekanntmachung des Hinweises auf die Patenterteilung: **15.09.1993**
(21) Anmeldenummer: 89111422.5
(22) Anmeldetag: 23.06.1989
(51) Int. Cl.: G01J 1/42, G01S 3/78

(54) **System zum Erkennen des Starts und des Anflugs von Objekten**
System for the recognition of the start and approach of objects
Système pour reconnaître le départ et l'approche d'objets

(30) Priorität: 25.08.1988 DE 3828766
(43) Veröffentlichungstag der Anmeldung: 28.02.1990
(73) Patentinhaber: Deutsche Aerospace AG, 81663 München (DE)
(72) Erfinder: Dirscherl, Reinhard, Dr., D-8028 Taufkirchen (DE); Seiffarth, Ernst A., D-8028 Taufkirchen (DE); Vötterl, Georg, D-8206 Heufeld (DE)

(56) Entgegenhaltungen:
- EP-A- 0 199 447
- US-A- 3 931 462
- US-A- 4 330 705
- US-H- 101
- OPTICAL ENGINEERING, Band 26, Nr. 3, März 1987, Seiten 182-190, Tucson, Arizona, US; M.R. KRUER et al.: "Infrared focal plane array technology development for Navy applications"
- JOURNAL OF IMAGING TECHNOLOGY, Band 11, Nr. 5, Oktober 1985, Seiten 215-220, Springfield, Virginia, US; Y. TSUCHIYA et al.: "Photon-counting image acquisition system and its applications"
- PROCEEDINGS OF THE 18TH SOUTHEASTERN SYMPOSIUM ON SYSTEM THEORY, Knoxville, Tennessee, 7. - 8. April 1986, Seiten 522-527; P.K. CARROLL et al.: "A simulation study of an infrared tracking algorithm"
- PATENT ABSTRACTS OF JAPAN, Band 13, Nr. 57 (P-825)[3405], 9. Februar 1989; & JP-A-63 247 680 (MITSUBISHI) 14-10-1988

## Beschreibung

Die Erfindung betrifft ein System zum Erkennen des Startes und des Anflugs von Objekten wie bedrohenden Waffensystemen.

Bisher bekannt waren hauptsächlich zwei Such- und Erkennungsprinzipien:
a) Passiv
   Zum Suchen und Erkennen eines Flugkörpers wurden Strahlendetektoren verwendet, die im sichtbaren und im infraroten Spektralbereich arbeiteten, um ein Ziel zu erkennen.
   Ein Beispiel einer solchen passiven Zielsuchanordnung ist in der Deutschen Patentschrift 30 14 906 angegeben. Das dort beschriebene Arbeitsprinzip ist jedoch auf Reihenanordnungen von Detektoren und deren Abtastung - zeitlich nacheinander - beschränkt. Die Anzahl anwendbarer Einzeldetektoren ist bei einer solchen Anordnung begrenzt und die Art der Zielsuche ist durch Zeitvergleich und Verzögerungsglieder ebenso wie die Auswertung erschwert.
b) Aktiv
   Aktive Systeme sind z.B. Radarsysteme oder allgemein solche Systeme bei denen elektromagnetische Strahlung ausgesandt wird und die reflektierte Strahlung eines derart beleuchteten Flugobjekts mit geeigneten Sensoren empfangen und analysiert wird. Die Sensoren werden auch elektrooptische Sensoren genannt, siehe z.B. Mikrowave Journal Sept. 1983 Heft 9 Seite 121 ff. Der Nachteil eines solchen Systems ist, daß seine markante Eigenemission vom Gegner detektiert werden kann.

Aus dem Dokument OPTICAL ENGINEERING, Band 26, Nr.3, März 1987, Seiten 182-190, Tuscon, Arizona, US; M.R. Kruer et al. : "Infrared focal plane array technology development for Navy applications" ist ein Entwicklungsplan für die IR-Focal Plane Array Technologie entnehmbar, wobei auf einem gemeinsamen Chip ein zweidimensionales Array von Hg Cd Te Photodioden vorgesehen werden soll, das geeignet wäre, eine größere Fläche zu übersehen wenn geeignete starre Sensoren zusammengebaut würden. Allerdings haben die IR-Sensoren ihre Grenzen.

Gemäß der EP-A-0 199 447, Seite 2 unten, sollen einzelne Objekte (unabhängig voneinander) vor direkt anfliegenden Waffen geschützt werden, die gegen diese Objekte z.B. auf einem Schlachtfeld eingesetzt wurden.

Für ein gemäß Seite 4 Mitte z.B. im Weltraum einsetzbares System für weiträumige Erkennung und zur Frühwarnung wie die Erfindung wäre eine Lösung nach Dokument 2 ungeeignet. Das nach Anspruch 1 notwendige Radar beschränkt dort die Reichweite. Gleiches gilt für die nach Seite 17, Zeilen 21 u.22 dort verwendete Photomultiplierröhre. Es handelt sich hier um einen Punktsensor. Bei diesem Sytem ist deshalb eine Bildverarbeitung unmöglich. Ferner handelt es sich um ein Gerät das nach dem Leistungsmeßprinzip arbeitet - s.S.17 a.a.0.

Aus der US-H-101 ist wiederum nur eine Lösung für kurze Reichweiten bekannt - als Anwendung ist z.B. die von einem Schützen tragbare STINGER-POST und deren Fernlenkung angegeben.

Bei dieser bekannten Lösung wird im UV nur der Schatten detektiert, den das Ziel am hellen UV-Himmelshintergrund verursacht. Dieses System funktioniert nur bei Tag und nicht bei Nacht.

Aufgabe der Erfindung ist es, ein elektrooptisches Erkennungssystem zu schaffen, daß mit hoher Sicherheit gegen Störeinflüsse arbeitet und eine Große Reichweite aufweist. Gemäß Lösung der Erfindung erfolgt eine Warnung vor einem aktiv angreifenen Flugkörper durch ein passives, elektrooptisch abbildendes System hoher örtlicher und zeitlicher Auflösung, das in einem speziellen Wellenlängenbereich (Solarblind) durch Kopplung mit einem Bildverarbeitungssystem das anfliegende Objekt fehlerfrei erkennt und daraus in Quasi-Echtzeit optimale Gegenmaßnahmen einzuleiten gestattet.

Weitere Merkmale und Ausgestaltungen der Erfindungen sind weiteren Ansprüchen sowie der Beschreibung und Zeichnung von Ausführungsbeispielen zu entnehmen, ohne hierauf beschränkt zu sein.

Diese wesentlichsten Vorteile der Erfindung sind:
Die sichere Identifizierung von Flugkörpern in großer Entfernung kann bei einem Warn- oder Alarmsystem zur Erstellung einer Bedrohungsanalyse und zu ggf. daraus abzuleitenden halb- oder vollautomatischen Gegenmaßnahmen angewandt werden.

Durch die Erfassung der Eigenemission des Flugkörperabgasstrahles (Plume-Signatur) im ultraviolettem Spektralbereich, mit gegenüber künstlichen und solaren UV-, Licht- und Wärmequellen blinder Sensorik, ist das erfindungsgemäße System wesentlich störsicherer als die bekannten Infrarotwarnsysteme, welche durch alle andersgearteten oder an anderen Orten befindlichen Wärmestrahlungsquellen getäuscht werden können.

Bei der Erfindung liegt das Nutzsignal wie es vom Sensor erfaßt wird schon in Quasi-Binärform vor (z.B. hell oder grau gegenüber dem homogen dunklen Hintergrund). Durch den Einsatz eines Flächensensors mit hoher Pixelzahl ist eine optimale Hintergrundunterdrückung bei hoher Ortsauflösung ohne bewegten Scanner gegeben.

Das erfindungsgemäße Erkennungssystem dient der Identifizierung, Verfolgung, Anflug-Koordinatenbestimmung und Warnung vor bestimmten Flugkörpern mit aktivem Triebwerk, insbesondere Raketen, Düsen- oder anderem Rückstoß- oder Strahltriebwerk oder auch Geschoßen mit z.B. pyrotechnischen Stoffen und Schweif oder Feuerschein, Flamme oder ähnlichen Zünd- oder Verbrennungserscheinungen.

Besonders bewährt hat sich bei dem erfindungsgemäßen Erkennungssystem, eine spektrale Bildwandlung vom ultravioletten Bereich in den sichtbaren Bereich unter gleichzeitiger elektrooptischer Verstärkung, elektronisch regelbarer Belichtung und Auslesung der Bildinformation über einen CCD-Chip, der diese Information in elektronischer, vorzugsweise digitaler Form, an einer Schnittstelle der Bildverarbeitungsstufe zur Verfügung stellt.

Von besonderem Vorteil ist die Verwendung einer Mikrokanalplatte für den elektrooptischen Teil des Erkennungssytems mit hoher örtlicher Auflösung. Weiter von Vorteil ist die gleichzeitige Elektronenvervielfachung (Faktor >10⁴), wobei auf der Eingangsseite der Vervielfacherröhre eine Photokathode sein kann und auf der Ausgangsseite eine phosphoreszierende Beschichtung oder ein anderer Leuchtschirm für die Bilderzeugung zur Verfügung steht. Eine direkte Kopplung des CCD's an den Ausgang der Mikrokanalplatte ist ebenfalls möglich.
Vor der Photokathode können mit Vorteil ein oder mehrere Filter zur Anwendung gelangen, die den auszuwertenden Spektralbereich in gewünschter Weise einengen. Die erreichbare Auflösung der Elektrooptik liegt bei mehr als 30 lp/mm.

Weiter vorteilhaft bei der Erfindung ist eine elektronische Kurzzeitbelichtung, durch die bei genügend großem Dynamikbereich der Verstärkung eine Verbesserung des Signal-Rausch-Verhältnisses und damit eine Reichweitenvergrößerung sowie eine verbesserte Abbildungsqualität und eine Stabilisierung der Bildinformation erreicht wird.

Besonders geeignet für die elektronische Belichtung ist eine Taktung, d.h. ein elektronisch regelbarer Zeittakt bzw. Zeitdauer zur Erzeugung pulsförmiger Taktsignale. Bisher verwendet man z.B.Trigger-Signale, Pulsbreitenmodulation, Periodendauer, Frequenzmodulation oder Zählen eines Taktes in vorgegebenem Zeitfenster und dergleich mehr. Bei gleichzeitiger Taktung mehrerer Komponenten müssen Zeitdauer und Einschaltzeitpunkt der Einzelkomponenten aufeinander abgestimmt sein.

Die Zeitdauer und die Zeitpunkte der oben angeführten Belichtung der Einzelkomponenten lassen sich durch die Kopplung an einen Lichtsensor, einen Schwingungssensor, einen Lage- oder Beschleunigungssensor noch weiter verbessern, d.h. hier bezüglich der Erkennungssicherheit oder Identifizierung.

Bei Verwendung eines Sensors mit Drehspiegelanordnung oder Anwendung und Zusammenfassung mehrerer Sensoren in später noch zu erläuternder Art und Weise läßt sich das Blickfeld oder Gesichtsfeld des Erkennungssystems bis hin zur Rundumsicht vergrößern. Für Anwendungen im Weltraum z.B. auf Satelliten ist die Kombination der großen Reichweite mit der hohen zeitlichen und örtlichen Auflösung bei fehlender atmosphärischer Extinktion besonders von Vorteil.

Einzelheiten der Erfindung sind nachstehend anhand der Ausführungsbeispiele erläutert ohne daß die Erfindung hierauf beschränkt wäre. Abwandlungen hiervon sind für den Fachmann jederzeit möglich. Es zeigen:
- Fig. 1: den ultravioletten Sensor des Erkennungssystems;
- Fig. 2: den prinzipiellen Aufbau eines Flugkörperwarnsystems mit Sensoren nach Fig. 1;
- Fig. 3: ein Bildauswerteschema mit Hilfe regelbarer Belichtungszeit;
- Fig. 4: Kombination der Auswertung von Nutzsignalen des UV-Sensors (obere Hälfte) und eines Vibrationssensors (untere Hälfte);
- Fig. 5: - obere Hälfte: Anordnung eines elektrooptischen Zooms und
- untere Hälfte: den Einbau des elektrooptischen Zooms in den elektrooptischen Teil des Erkennungssystems einschl. Bildwandler und Bildausleser;
- Fig. 6: im oberen Teil eine Mikrokanalplatte, im mittleren Teil die Elektronenvervielfacherröhre in Ansicht und im unteren Teil das Funktionsprinzip einer einzelnen Mikrokanalröhre im Längsschnitt;
- Fig. 7: zeigt eine intelligente Anwendung des Sensors zur Bilddarstellung in verschiedenen Spektralbereichen,
- Fig. 8: zeigt ein Schaubild der Sensorempfindlichkeit und den betreffenden Spektralbereich,
- Fig. 9: zeigt eine Linsenanordnung, insbesondere eine Tricklinse um selektiv bestimmte Spektralbereiche zu betrachten,
- Fig. 10: eine Spiegelanordnung wie sie mit der Erfindung, insbesondere im Rahmen der Fig. 11 anwendbar ist,
- Fig. 11: eine Prismenanordnung kombiniert mit Spiegelanordnung,
- Fig. 12: eine Bildauswertung im Beispiel anhand eines Videobildes.

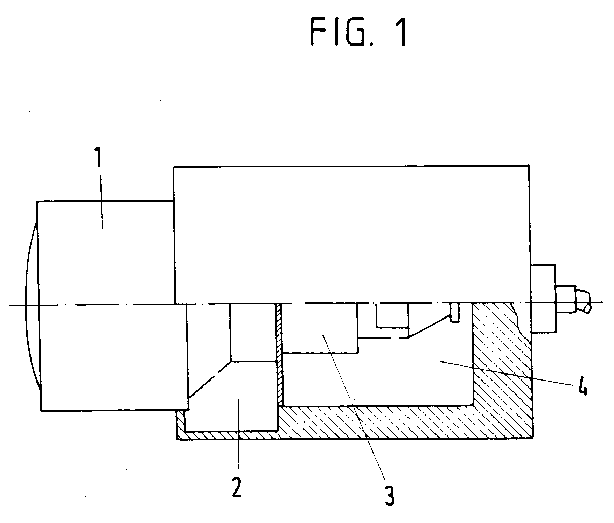

Wie Fig. 1 zeigt, läßt sich aus der Querschnittszeichnung der Ultraviolettsensor und die wichtigsten seiner Einzelkomponenten erkennen. Diese Komponenten sind die Ultraviolett-Optik 1 ein Bildwandler 2, der Licht aus dem ultravioletten in den visuellen oder sichtbaren Spektralbereich wandelt, ein Bildverstärker 3 und mit 4 einen Koppler, der den Bildverstärker 3, z.B. mittels Faserkoppler, an einen CCD-Chip und an die Bildauswertestufe ankoppelt.

Der neue UV-Sensor gemäß der Erfindung weist ein sehr viel geringeres Detektorrauschen auf als z.B. bekannte IR-Detektoren. Bekannte IR-Detektoren müssen gekühlt werden und sind einzeln abzutasten, dies erfordert komplexe und bewegliche Teile, die nicht schockfest genug sind.

IR-Bilder sind kontrastärmer und flauer als UV-Bilder, wegen der bis zu einem Faktor 50 größeren Wellenlänge, was auch proportional größere Eingangsoptiken bedingt.

Die Infrarotsensoren haben ferner ein hohes Hintergrundrauschen, da die Plank'sche-Strahlung von normaler Umgebungstemperatur (300K) ihr Maximum bei 10 Mikrometer hat. Bekannte IR-Focal-Plane-Array-Detektoren sind noch sehr teuer, in der Auflösung weit unterhalb der der Bildsensoren im ultravioletten Wellenlängenbereich. Sie müssen gekühlt werden und weisen einen nur geringen dynamischen Arbeitsbereich auf. Täuschkörper mit hoher Intensität im IR-Fenster sind leicht herstellbar (Flares). Die Reichweite von Infrarotdetektorsystemen ist ebenfalls durch atmosphärische Extinktion eingeschränkt.

Mit dem erfindungsgemäßen UV-Sensor z.B. nach Fig. 1, läßt sich ein Frühwarnsystem schaffen, das optimal im Weltraum einsetzbar ist und vor feindlichen aktiven Flugkörpern warnt, die eindeutig nachgewiesen werden können mit niedrigen Fehlalarmraten. Der angegebene UV-Sensor läßt nicht nur den "Plume" des Abgasstrahls des Flugkörpers erkennen, sondern er läßt auch Aussagen über die Art des Flugkörpers und dessen Flugrichtung zu, die verfolgt (nachgeführt) werden kann. Die Richtung des Anflugs kann vom bekannten oder erwarteten Ursprung her durch Koordinatenbestimmung erfolgen, die Art des Flugkörpers kann durch Vergleich mit vorbekannten gespeicherten Daten von Rückstoßtriebwerken ermittelt werden, wobei z.B. die Größe (Durchmesser des Abgasstrahls), seine Länge, seine Spektrallinie bzw. seinen Spektralwellenlängenbereich und/oder Farbtemperatur erkannt werden.

Der erfindungsgemäße UV-Sensor weist eine hohe Dynamik auf und hat auch die Vorrichtung bei Blickrichtung entgegen der Sonne eine hohe Reichweite zur Folge durch Anti Blooming. Der Aufbau des UV-Sensors ohne bewegliche Teile und ohne Kühlung, in einem gemeinsamen Gehäuse mit Optik untergebracht, vermeidet Schockempfindlichkeiten. EMP (Elektro-Magnet-Puls)-Festigkeit kann durch Glasfaser-Signalleitung zwischen UV-Sensor und Bildverarbeitung erhöht werden, wobei sich der Sensor an der Oberfläche, die Bildverarbeitung und Elektronik im geschützten inneren Teil des Waffensystems, z.B. Hubschrauber, Flugzeug befindet. Durch eine zeitliche Korrelation - online mit dem Informationsfluß des Erkennungssystems läßt sich nicht nur eine Warnung oder ein Alarm erzeugen, sondern es können auch optimale operationelle zeitliche, örtliche und mengenmäßige Gegenmaßnahmen nach dem Erkennen eines feindlichen Flugkörpers aus dessen Ursprung, der Anflugrichtung-, Anfluggeschwindigkeit, und/oder der Art des Triebwerks erfolgen. Die Entscheidung über die Gegenmaßnahmen erfolgt zweckmäßig nach einer in Quasi-Echtzeit erstellten Bedrohungsanalyse insbesondere welcher Flugkörper mit welcher Geschwindigkeit von welchen Startorten in welche Richtung fliegt, und die Antwort auf die Bedrohung kann sofort erfolgen z.B. durch Führen eines entgegenzusteuernden Abwehrflugkörpers, der unter Vermittlung des dem Erkennungssystem inerten Koordinatensystems in die betreffende Abwehrposition und gegenbenenfalls Abwehrflugbahn gebracht wird. Ein mit dem Warnsystem verbundener Zentralrechner kann jedoch auch die Flugbahn des angreifenden aktiven Flugkörpers vorrausberechnen ein Ausweichmanöver initiieren und/oder den zeitlichen, örtlichen und mengenmäßigen Einsatz der Abwehr berechnen und einleiten, jenachdem wie und wo eine Zerstörung oder Unschädlichmachung des anfliegenden feindlichen Flugkörpers geplant ist.

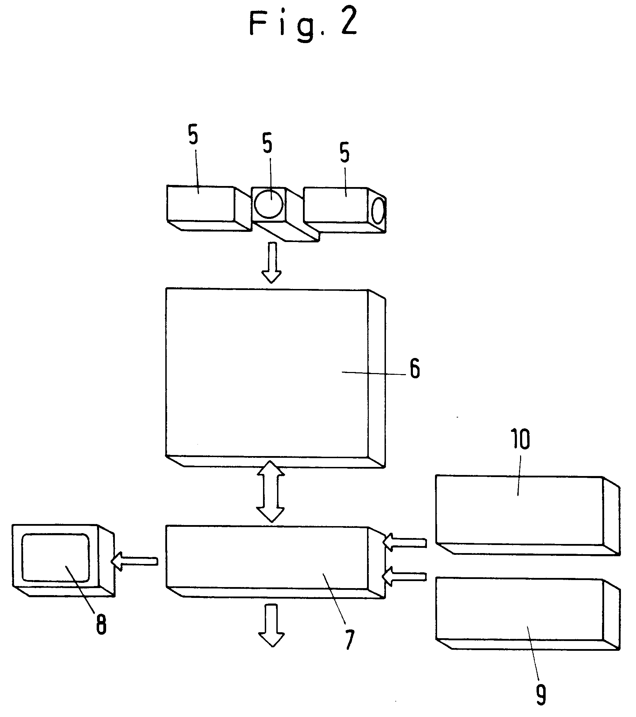

Fig. 2 zeigt drei UV-Sensoren 5, die insgesamt so einander zugeordnet sind, daß sie einen Blickwinkel von 360° ermöglichen. Wie das Blockschaltbild der Fig. 2 weiter zeigt, sind die UV-Sensoren 5 mit einer Signalaufbereitungsstufe 6 über Datenbus verbunden, diese ihrerseits mit der Bildverarbeitungsstufe 7 und einem Rechner. Der Rechner der Stufe 7, der auch hiervon getrennt ausgeführt sein kann, ist optionell mit einer Anzeige 8, einem UV-Punktdetektor 9 und/oder weiteren Sensoren, wie Schwingungssensoren 10, und einer Stufe 11 für die eventuelle Auslösung von Gegenmaßnahmen verbunden. Der Sensor ist mit einem Bildspeicher verbunden und wird angesteuert durch Takten und Zoomen. Am analogen-digitalen Ausgang der Stufe 6 ist diese über Bus verbunden mit der Bildverarbeitungsstufe 7 und dem Rechner. Der Rechner auf dem die Bedrohungsanalyse erstellt wird kann seinerseits mit einer Anzeige- und Bedieneinheit 8, vorzugsweise einem Farbmonitor mit Tastatur, verbunden sein, auf dem eine Bedrohung angezeigt wird und ein Menu für Gegenmaßnahmen dargeboten wird. Je nach Bedrohung können unter Umständen manuell Gegenmaßnahmen eingeleitet werden, bevorzugt jedoch menuegesteuert halbautomatisch und automatisch, in Quasi-Echtzeit, optimal gemäß gespeichertem Programm der zur Verfügung stehenden Abwehrmaßnahmen und mit Hilfe von Aktoren, die die Gegenmaßnahmen auslösen und ebenfalls vom Rechner 7 des Erkennungssystems gesteuert oder einem anderen Rechner (Zentralrechner), der mit ersterem verbunden ist, geführt werden.

Der passive elektrooptisch abbildende Teil des Erkennungssystems gemäß der Erfindung verfügt über eine Weitwinkel-Eingangsoptik mit einer spektralen Transmission die im Wellenlängenbereich über beispielsweise 200nm das Gesichtsfeld auf eine lichtempflindliche Fläche - die Phothokathode abbildet. Die auf dieser Fläche vorliegende Bildinformation wird vom ultravioletten zum sichtbaren Wellenlängenbereich (grün) über den Bildwandler 2 transformiert und mittels Bildverstärker 3 bei möglichst geringer Verfälschung intensitätsverstärkt, weitergegeben und über einen z.B. taper-fasergekoppelten CCD-Chip 4 ausgelesen; in Form von Videobildern an die Bildverarbeitungsstufe 7 weitergegeben. Befindet sich kein Flugkörper im Anflug, so ergibt sich für die Bildverarbeitung ein homogen-dunkles Bild, da UV-Strahlenquellen fehlen.

Es wird, wenn der UV-Plume des Abgasstrahls eines Flugkörpers in das Gesichtsfeld des Erkennungssystems eintaucht, dieser Plume im Videobild als heller Lichtfleck auftauchen, in dem Wellenlängenbereich (UV), für den das erfindungsgemäße Erkennungssystem geschaffen wurde. Die an sich bekannte Bildverarbeitungsstufe ändert die Bildinformation des Videobildes nun dergestalt, daß der Flugkörper im Vergleich zum Hintergrund noch besser erkennbar ist, d.h. sie verbessert das Bild, korrigiert Bildfehler usw.
Die Änderung der Koordinaten beim Anflug des Flugkörpers innerhalb des Gesichtsfeldes der Sensoren werden in Quasi-Echtzeit registriert, und die Signatur des Abgasstrahls bezüglich seiner Größe, Intensität, Form, Schwerpunkt, Richtung, Kontinuität ausgewertet und erkannt.
Dabei werden Fehlalarm und Täuschmöglichkeiten weitestgehend ausgeschaltet, indem man den vom Sensor erfaßten Flugbahnverlauf, Helligkeits- und Flächenzunahme und sonstige typische Plume-Eigenschaften vergleicht mit den gespeicherten Eigenschaften bekannter Muster die dem typischen Verhalten von fliegenden Objekten entsprechen.

Mehrere UV-Sensoren können bei überlappendem Gesichtsfeld den einmal erkannten Flugkörper bzw. das Objekt ohne Nachführung der Optik in Rundumsicht verfolgen. Das Linsensystem mit einer Kombination geeigneter Materialien wird in seiner optischen Qualität für die Abbildung so gewählt, daß über den gesamten inbetrachtkommenden Wellenlängenbereich die Bildinformation in hoher Qualität abgebildet wird und so das Bild auf der Photokathode besser oder gleich gut ist wie die sich daran anschließende elektrooptische Verstärkung und Abbildung (z.B. lp/mm, Transmission, Apertur, Gesichtsfeldgröße, Verzeichnung).

Im lichtoptischen Teil des Erkennungssystems werden ein oder mehrere Filter für die wellenlängenspezifische Auswahl des vom Gesichtsfeld einfallenden Lichtes so eingesetzt, daß die UV-Signatur des Raketenplumes optimal transmittiert wird bei maximaler Filterung (Absorption) aller sonstigen Wellenlängen des vorhandenen Lichtes. Der Einsatz kann dabei sowohl bei hellem Hintergrund (Tageinsatz) oder noch besser bei relativ dunklem Hintergrund (Nachteinsatz) erfolgen. Beim Nachteinsatz kann die Filterung eventuell entfallen, wenn das Hintergrundrauschen nicht ins Gewicht fällt. Es kann auch eine spezielle Photokathode aus z.B. CsJ, RbTe oder CsTe Einsatz finden die nur im UV-Spektralbereich empfindlich ist, oder eine breitbandig (200-1000nm) empfindliche Photokathode wie z.B. Bialkali, GaAs, alles in Kombination mit geeigneten Filtern.

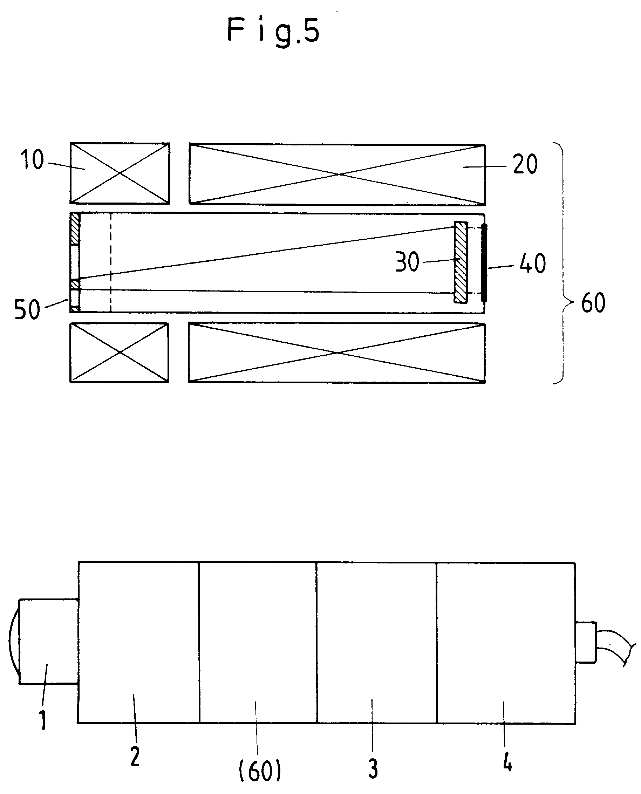

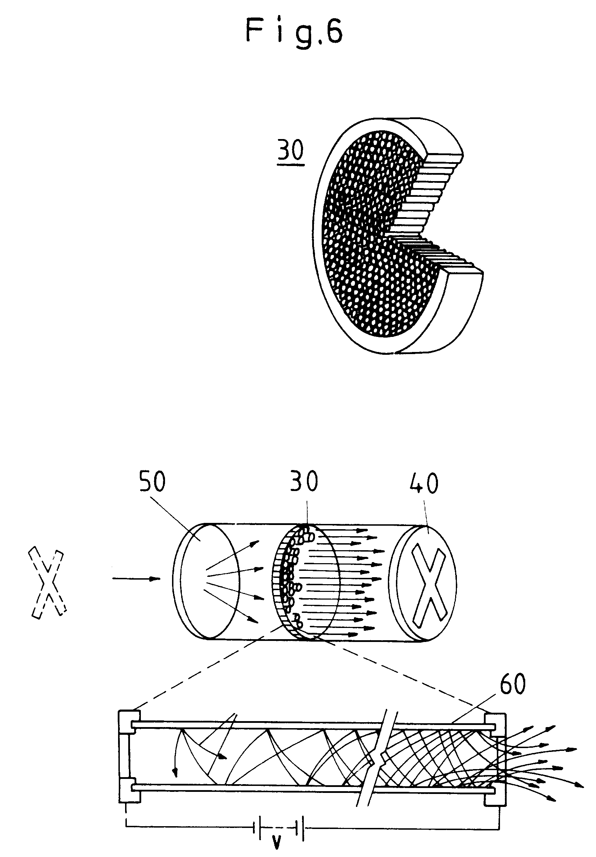

Der elektrooptische Teil 5,6 liefert ein Videosignal an die Bildverarbeitungsstufe 7 mit Rechner und geeigneter Schnittstelle. Bevorzugt werden Videosignale, erzeugt durch Betrieb des Sensors mittels Takten oder Zoomen, d.h. die Belichtung und das Gesichtsfeld des Sensors werden elektronisch geregelt. Weist der elektrooptische Teil mehrere taktbare Komponenten auf, so müssen Zeitdauer und Einschaltzeitpunkt der einzelnen Komponenten aufeinander abgestimmt sein. Solche Sensoren sind z.B. Bildwandler, Bildverstärker oder SIT-Röhren (Silicon Intensifight Taget vgl. Fig. 5 und 6). Geeignet sind Bildwandler des Nahfokustyps (Proxifier) mit entsprechender Photokathode; eine Verstärkungsstufe mit eventuell kaskadiertem Bildverstärker und einer Bildauslesung direkt gekoppelt oder über Abbildungsoptik oder Taperfaserankopplung an CCD-Chip's mit genügender Auflösung und Dynamik z.B. wie von der Firma Dalsa Inc., Canada unter der geschützten Marke PHOTOFET vertrieben.

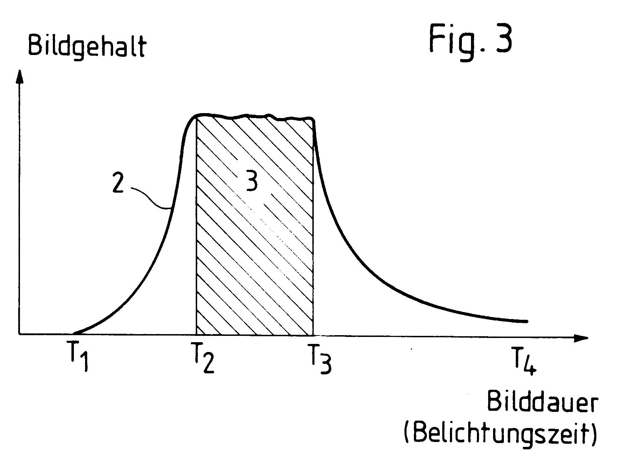

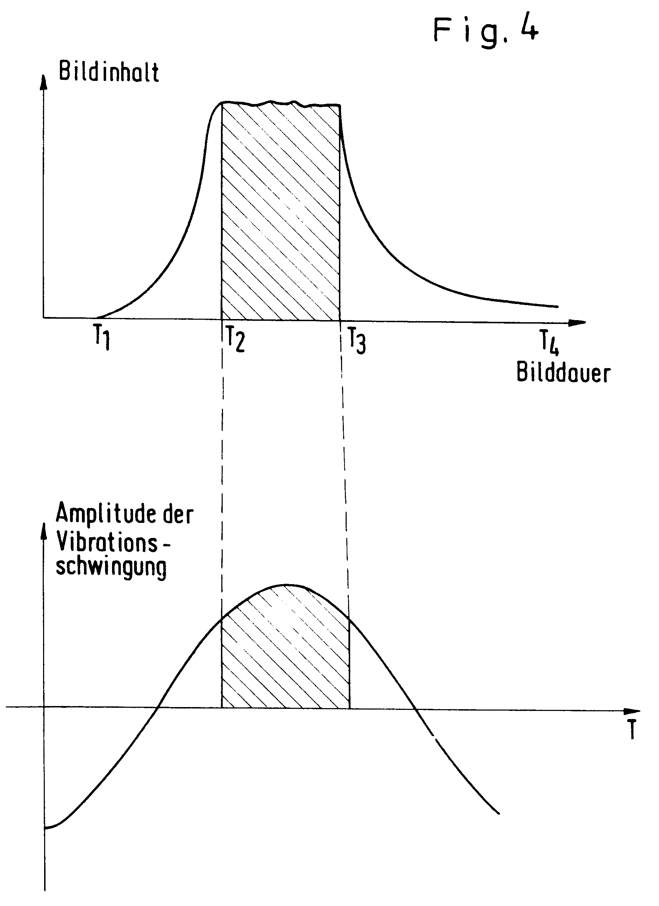

Die elektronische Kurzzeitbelichtung erreicht durch die große vorhandene Dynamik eine Reichweitenvergrößerung und eine verbesserte Abbildungsqualität beim sehr rasch ablaufenden Abbildungsvorgang (einfrieren Mikro- bis Nanosekunden-Bereich) und damit eine erleichterte Bildverarbeitung wie Fig. 3 zeigt. Die Belichtungszeit wird dabei vom Bildwandler 2 und Bildverstärker 3 derart eingestellt, daß nur zwischen der Belichtungszeit T₂ und T₃ ein Bildgehalt vorliegt, um die Bildaussage zu optimieren. Eine Stabilisierung der Bildinformation bzgl. Verwackelung wird erreicht durch eine Koppelung der Belichtungszeit an einen zusätzlichen Schwingungssensor wie Fig. 4 zeigt. Dort ist der Zusammenhang zwischen optimaler Öffnungszeit der Belichtung T₂ bis T₃ des UV-Sensors oben und das Schwingungsverhaltens des vibrierenden Sensors unten zu entnehmen. Der Schwingungssensor 10 ist optionell in Fig. 2 dargestellt. Gleiches gilt für einen UV-Punktdetektor 9 der zusätzlich Schutz vor Blendung oder Beschädigung durch stark einfallende Strahlungsintensität bietet.

Die Belichtungszeiten können bis in den Nanosekundenbereich für Bildverstärker abgesenkt werden.

Der Bildwandler wird z.B. mit der Zeit T₁ aktiviert, die nachfolgende Stufe z.B. BIV wird mit T₂ < T₁ aktiviert, da die 1. Stufe eine Einschwing- und Abfallphase hat, in der der Bildinhalt nicht optimal ist. Durch die kürzere Bildverstärkungsphase T₂ bis T₃ innerhalb des aktiven Zeitfensters des Bildwandlers T₁ bis T₄ werden Anstiegs- und Abfallkanten beschnitten. Daraus resultiert bei Hintergrundbegrenzung eine erhöhte Reichweite. Die UV-Signatur eines schnell bewegten Flugkörpers ist durch die große Relativgeschwindigkeit innerhalb des Gesichtsfeldes (Blickfeldes) verwaschen. Die Flugkörper-Signatur kann in einer Belichtungszeit von z.B. 20ms einen Großteil des Bildfeldes durchlaufen und ist deshalb schwer zu analysieren. Bei Kurzzeitbelichtung sind dagegen diese Größen auswertbar, z.B. durch die beschriebene Taktung, und ermöglichen die Erkennung des Flugkörpers. Das gleiche gilt für den Fall des sich bewegenden Erkennungssystems. Hier wäre ohne Taktung die Bildinformationen verwaschen. Die Steuerung des Taktens kann gemäß Fig. 4 mittels Schwingungs- , Lage- oder Beschleunigungssensor erfolgen. Solche Sensoren, wie z.B. piezoelektrische Sensoren, sind im Handel erhältlich, sind sehr klein und leicht und geben ein Signal ab, das proportional der Beschleunigung ist, sei es durch Vibration des Gerätes auf dem sie sich befinden, oder durch Schwenken des Sensors selbst. Dieses Signal wird verstärkt und steht in Form einer Wechselspannung zur Auswertung zur Verfügung. Vibrationen die z.B. von der Sensorplattform herrühren werden typisch von einem Schwingungssensor registriert, z.B. in Form einer Sinuskurve, die evtl. durch bekannte Filter geglättet werden kann. Für die Taktung ist entscheidend, daß innerhalb der Sinusschwingung, die eine Störung verursacht, ein Fenster für die Belichtung ausgewählt wird (siehe Fig. 4) zwischen T₂ und T₃. Das Einschaltfenster T₂ bis T₃ soll möglichst groß sein und innerhalb dieser Aktivzeit möglichst wenig Richtungsänderung erfahren.

Für den abstrahierten Fall der Sinus-Schwingung darf alle λ/2-Wellenlängen das Fenster mit seinem zeitlichen Mittelpunkt am Minimum/Maximum-Durchgang des Sinus-Signals des zusätzlichen Sensors gemäß Fig. 4 unten offen gehalten werden. Wie weit das Fenster um den Minimum/Maximum-Punkt der Sinus-Kurve ausgedehnt werden kann, läßt sich leicht experimentell bestimmen. Für den Fall einer nicht sinus-förmigen Vibrationsstörung kann der Signalverlauf, z.B. durch Filterung, FFT oder ähnliches, vorbearbeitet werden, bevor die Rückkopplung mit der Verschlußzeit stattfindet.

Bei Anwendung des Erkennungssystems mit Belichtungszeitsteuerung vom Beschleunigungssensor können auch andere sich schnell ändernde Ereignisse besser überwacht werden, weil es hierbei möglich wird, eine Bildstabilisierung bei jeglicher Art von bewegter Kameraführung zu erreichen, d.h. immer dann, wenn es darauf ankommt, den Bildinhalt von örtlichen Schwankungen zu befreien (auch allgemein bei Robotik anwendbar).

Anstelle der Taktung oder zusätzlich dazu kann auch eine elektronische Gesichtsfeldänderung (Zoom) gemäß Fig. 5 angewandt werden.

Das elektrooptische Zoom-Teil kann ebenso wie der Bildverstärker sowohl hintereinander und zwischen Bildwandler und CCD-Auslesung angeordnet sein, als auch integriert sein, z.B. als integrierter Elektrooptischer Baustein. Variiert man die Gesichtsfeldgröße durch das Zoomen innerhalb der verfügbaren Zeit so ergibt sich eine Erhöhung der Aussagekraft - hier der Erkennungssicherheit. Beim Nachweis von ultravioletten Strahlenquellen im Rundumsicht-Mode sind diese einzeln durch Vergrößerung des kleinen UV-Ereignisses zu betrachten und eindeutig zu identifizieren. Bei Nichtidentifizierung eines Flugkörpers ist die nächste UV-Strahlenquelle in Nahbetrachtung, wie oben beschrieben, abzuarbeiten usw., bis alle UV-Lichtquellen des Gesichtsfeldes betrachtet wurden. Bei Flugkörper-Identifizierung ist dieser zu verfolgen und die Bedrohung durch ihn zu analysieren. Wenn die Gesichtsfeldänderung kontinuierlich erfolgt, so ist der elektrooptische Zoom in der Lage einen beliebigen Teil des Gesichtsfeldes innerhalb festgesetzter Randbedingungen zu verändern und zentral darzustellen.

Ein Ausführungsbeispiel mit elektronischem Zoom ist in Fig. 5 dargestellt. Dabei wird durch Anlegen geeigneter elektromagnetischer Felder nur ein Teil der 1. Bildfeldebene auf die folgende Bildfeldebene (Phosphor) abgebildet. Um die Photokathode 50 am Strahlungseingang ist die Vergrößerungsspule 10 und hinter dieser Focussierungs- und Ablenkspulen 20 um die Röhre 60 zur Elektronen-Vervielfachung herum angeordnet. Mit 30 ist die Mikrokanalplatte innerhalb der Röhre 60 bezeichnet und mit 40 die phosphoreszierende Scheibe als Strahlungsausgang. Die elektrooptische Zoom-Vorrichtung ergibt einen Gewinn an Orts- und Intensitätsauffassung durch Variation der angelegten elektromagneten Felder. Die elektronischen Ein- und Ausschaltzeiten sind ähnlich wie beim Takten bis in den ms-Bereich möglich. Bevorzugte Zeiten für das Ein- und Ausschalten von Gesichtsfeldänderungen sind im Bereich der Belichtungszeit von einigen Bildern, d.h. im Bereich von ca. 50ms. Die Dauer der Vergrößerung hängt von der Zeit ab, die zur Analyse mittels Bildverarbeitung benötig wird.

Anstelle oder zusätzlich zum elektrooptischen Zoom kann auch eine Signal/Rausch-Verhältnisverbesserung erreicht werden durch Zoomen im Bildverarbeitungsteil des Erkennungssystems. Durch geeignete Algorithmen mit Subpixelberechnungen läßt sich dann die Aussage des Bildinhaltes verbessern.

Das Erkennungssystem der Erfindung kann nicht nur im ultravioletten, sondern auch im sichtbaren Bereich und dem diesem Spektralbereich nahen Infrarot eingesetzt werden (200nm bis etwa 1000nm).

Bei dieser Variante der Erfindung wird die bisher beschriebene Photokathode durch eine andere ersetzt, die in dem gewünschten erweiterten Spektralbereich empfindlich ist, z.B. Bialkali, S20, GaAs. Dadurch wird das Erkennungssystem der Erfindung zu einem multispektralen Sensor. Durch eine Filterscheibe mit geeigneten Filtern vor der Photokathode, die mechanisch in Drehung versetzt werden kann, lassen sich die speziell gewünschten Spektralbereiche einfach vorwählen. Dies geschieht bevorzugt rechnergesteuert über Aktoren, die den Filterscheibenantrieb beeinflußen. Wird die Filterscheibe rotiert wie ein Chopper, so läßt sich z.B. jedes gerade Bild mit UV-Filter auf dem 1. Monitor, jedes ungerade Bild mit IR-Filter auf einem 2. Monitor als IR-Bild darstellen. Durch Koinzidenz von bekannten UV- und IR-Plumesignaturen verbessert sich die Falschalarmrate und Aussagekraft.Die Bildverarbeitung geschieht wie bei den übrigen Ausführungsbeispielen. Das Analysieren ist im sichtbaren Spektralbereich schwieriger. Eine einfache Bildverbesserung kann durch Kontrastanhebung, elektronische Filterung usw. erreicht werden, bei Tageinsatz muß die einfallende Lichtintensität wegen der dann hohen Empfindlichkeit des Erkennungssystems abgeschwächt werden. Bei Nachteinsatz dient das Erkennungssystem als Nachtsichtgerät mit obigen Eigenschaften.

Das Erkennungssystem gemäß der Erfindung eignet sich für operative Einsatze je nach Sensorzusammenstellung und einem Gesichtsfeld, das bis zur Rundumsicht reicht.
Durch Einsatz mehrerer Sensoren mit festem Gesichtsfeld, die in verschiedene, sich nur knapp überlagernde Richtungen blicken, kann der gesamte Raum abgedeckt werden. Dabei ist zu berücksichtigen, daß die Reichweitenanforderung an das Gesamtsystem abhängt von der Auflösung der Einzelsensoren. Für ein Frühwarnsystem gemäß Fig. 2 ist eine Rundumsicht in Azimut gewährleistet. Die Abdeckung in Elevation ist an den Polkappen nur bedingt gegeben, kann aber durch zusätzliche Sensoren oder Erweiterung des Gesichtsfeldes der Einzelsensoren auch dahingehend erweitert werden, wenn es der operationelle Einsatz erfordert.
Bei mehreren Sensoren muß die Bildverarbeitung die Bildinformation der Einzelsensoren sequentiell oder parallel abarbeiten. Bei Identifikation eines Flugkörpers in einem Sensor, muß dieser weiterbearbeitet werden, auf Kosten der anderen Sensoren. Um eine Überlastung der Rechenkapazität der Bildverarbeitung zu vermeiden, werden nur interessierende Bildinhalte der Einzelsensoren an die Zieltracker weitergeleitet. Der Großteil der Bildinhalte ist ohne Flugkörper-Signatur und konstant in seinem Informationsgehalt und braucht deshalb nicht weiterverarbeitet zu werden. Der Fall, daß gleichzeitig aus konträren Richtungen ein Flugkörper-Angriff erfolgt ist relativ unwahrscheinlich, d.h. mit anderen Worten, daß bei einem prinzipiellen Aufbau gemäß Fig. 2 oder ähnlich, ausreichende Erkennungssicherheit gegeben ist, zumal etwaige Startorte und Anflugrichtung vorbekannt sind oder vermutet werden können als Vorgabemuster, z.B. aus einem Festwertspeicher abrufbar, was auch für andere Triebwerksparameter und Flugkörperparameter gilt. Anflugwinkel, Beschleunigung bzw. Geschwindigkeit und anderes können mit der Sensoranordnung und Auswerteeinrichtung erkannt werden. Zusätzlich ist unter Umständen eine (Laseroptische) Entfernungsmessung und eine an sich bekannte Freund/Feind-Erkennung anwendbar.

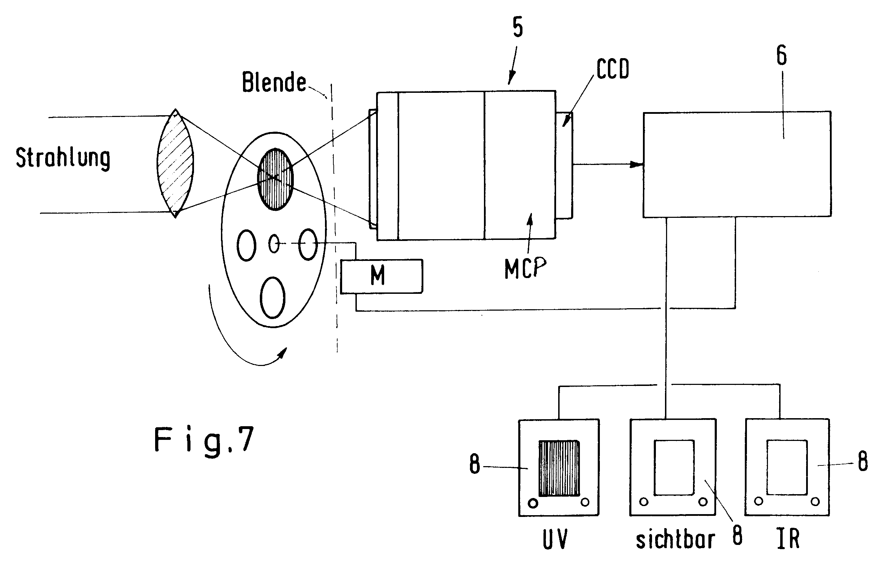

Fig. 7 zeigt ein Erkennungssystem mit von einem Motor, insbesondere Elektromotor, antreibbaren Filterrad zur Auswertung verschiedener Spektralbereiche, steuerbar vom Rechner 7 der mit der Bildauslesung 6 und den Monitoren 8 verbunden ist.

Dabei wird die Filterraddrehgeschwindigkeit mit der Bildauslesung rechnergestützt derart elektrisch verknüpft, daß z.B. bei jedem dritten Bild, wenn man es auf drei auszuwertende Spektralbereiche bezieht, z.B. der IR-Filter vor der Photokathode angeordnet ist, in der optischen Achse des Systems.

Die Auslesesequenz ändert sich mit der Anzahl der Filterscheiben. Diese kann auch einen Tag/Nacht-Auswerte-Mode bzw. Stellung umfassen. Bei intelligenter Auswertung kann auf eine Monitordarstellung verzichtet werden, indem der Rechner 7 die Bildinhalte verschiedener Spektralbereiche vergleicht mit vorbekannten Mustern signifikanter Objekte aus einem Speicher. Bei gewünschter Anwendung kann das Kamerasystem als Sichthilfe und bei Nachteinsätzen als intelligente Restlichtkamera abgewandelt bzw. entsprechend angepaßt werden.

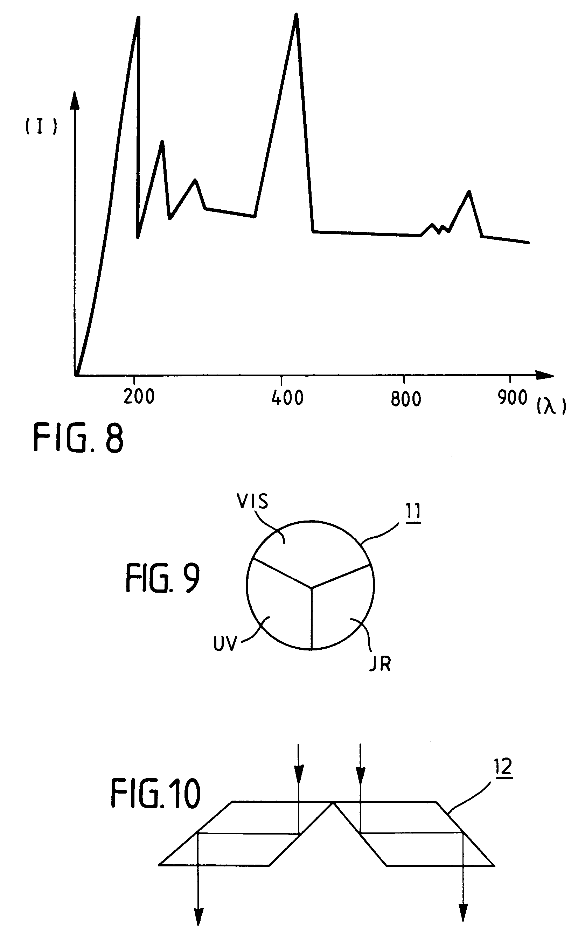

In einer anderen Ausführungsform der Erfindung wie in den Figuren 9 bis 12 dargestellt und nachstehend erläutert, wird ein multispektraler Sensor geschaffen, dessen spektralempfindliche Bereiche durch die freiwählbaren Transmissionseigenschaften innerhalb eines sehr weiten Bereiches etwa 200 bis 900 nm gegeben sind, insbesondere durch den Einsatz eines optischen Elementes vor der Eingangsoptik. Der spektrale Bereich, welcher auswertbar ist, ist in Fig. 8 dargestellt. Dabei ist auf der Ordinate die Intensität der Strahlung und auf der Abzisse die Wellenlängen zwischen 200 bis 900 nm dargestellt (λ). Es sind deutlich verschiedene Intensitätsmaxima sichtbar, wie sie in zu betrachtenden Szenen vorkommen.

Da der fotoempfindliche Teil des Sensors Fig. 1 rechts, Fig. 7 rechts am Sensor 5 sowohl als Sensor als auch als Verstärkungselement ausgebildet ist, insbesondere als Photokathode mit integriertem Bildverstärker, sind die Sensoreigenschaften mit hoher Dynamik den jeweiligen Gegebenheiten einer Szene leicht anpaßbar. Zur Erläuterung dessen wird nachfolgend ein spezieller Fall rein beispielsweise, zum besseren Verständnis, ausgewählt:

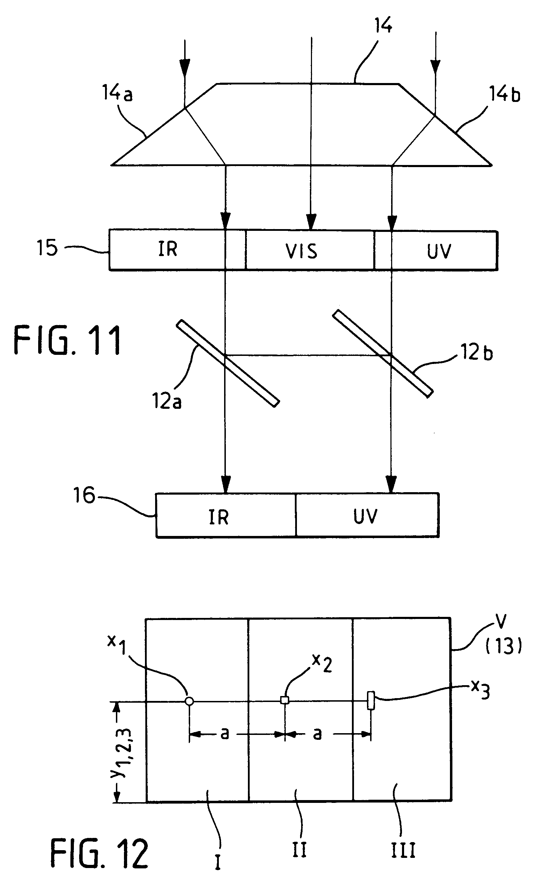

Der Sensor habe als fotoempfindlichen Teil eine Photokathode, z.B. Typ S 20 von ca. 200 nm bis 850 nm empfindlich und ist mit einem nachgeschalteten Bildverstärker und Bildauslesung über CCD-Sensorik versehen. Das optische Element vor der Strahleneingangsoptik teile das Bild der Szene derart auf, daß auf die CCD-Matrix parallel versetzt drei gleiche Bildszenen abgebildet werden (vgl. Fig. 12). Ist das optische Element zusätzlich dahingehend abgewandelt, daß nur je Bildteil ein charakteristischer Spektralbereich (UV, VIS, IR oder Grün/Rot/Blau) transmittiert wird, so liegt pro Bildfeld des Videobildes die gleiche Szene in drei verschiedenen Spektralbereichen gleichzeitig vor.

Wird nun zur Ortung und Erkennung eines Objekts, wie Flugkörper, eine spezielle Wellenlänge als signifikant erkannt, so erscheint diese Strahlung bei geeigneter spektraler Filterung in der Linsen- oder Filteranordnung 9 und mit Hilfe von Spiegeln wie in Fig. 10 und 11 zu gleichen Zeiten als dreifacher Lichtpunkt auf dem Videobild V (vgl. 13 in Fig. 12). Dies ergibt eine eindeutige Ortung und Erkennung eines Objektes, sowohl nach ihrem Abstand in der X- und Y-Achse auf dem Videobild als auch hinsichtlich der Form der Bildpunkte, die einem Objekt entsprechen, siehe X₁, X₂ und X₃ in Fig. 12 mit den senkrechten Abständen Y₁, Y₂ und Y₃. Dabei sind die seitlichen Verschiebungen der Abstände a hier der Objekte untereinander konstant.

Bei dieser Ausführung kann eine übliche Tricklinse mit verschiedenartigen Schichten angewandt werden, wie sie z.B. in Fig. 9 dargestellt ist. Die Bereiche, hier VIS, UV, IR oder Grün/Rot/Blau oder andere, können beliebig gewählt werden, nicht nur sektorförmig, sondern auch mit einem Zentralbereich. Die Bereiche können sich teilweise überlappen oder überdecken.

Fig. 10 zeigt eine Spiegelbauart, wie sie zur Umlenkung der Lichtstrahlen und Selektion einzelner Spektralbereich mit angewandt werden kann. Die Linsenanordnung ist mit 11 bezeichnet und kann z.B. an die Stelle einer drehbaren Filterscheibe, gem. Fig. 7, treten.

Der Spiegel 12 ist insbesondere geeignet im Strahlengang (wie in Fig. 11) spezielle Vereinzelungen zu erleichtern.

In der Fig. 11 ist als optisches Element eine Linsen- bzw. Prismenanordnung 14 eingesetzt, wobei dieses Prisma insbesondere aus Quarz oder Fluoridglas oder anderem Material ähnlich guter optischer Eigenschaften besteht. Die seitlich abgeschrägten Flächen 14a und 14b bestehen aus unterschiedlichen selektiven Filterschichten, je nach dem welcher Spektralbereich auszuwerten gewünscht ist. Unter dem Prisma 14 ist in Fig. 11 ein Bildgeber 15 und eine Spiegelanordnung 12a und 12b dargestellt, dahinter im Strahlengang ein selektierter Bildgeber 16. Solche optischen Elemente, wie Strahlteiler, Spiegel, Filter, Prismen, Linsen usw. sind an sich bekannt. Nicht dargestellt ist die Bildauswertung, insbesondere dynamische Auswertung und Bildanalyse mit Hilfe eines Rechners. Dies gilt auch für Fig. 12, wo das Videobild 13 z.B. auf einem Monitor rechnergestützt gewonnen wird, mit Hilfe eines nicht dargestellten Rechners, in dem auch die Algorithmen für die Auswertung der Bildinhalte gespeichert sind. Nur so ist eine fehlerfreie Erkennung des Objektes über die gesamte Flugbahn möglich.

## Patentansprüche

1. System zum Erkennen des Starts und des Anflugs von Objekten anhand ihres Feuers oder ihrer Abgasstrahlen - der sogenannten Plumesignatur - mittels Strahlendetektor (5) für einen bestimmten Spektralbereich und elektronischer Signalverarbeitungs- und Auswerteschaltung für die vom Detektor an die Schaltung abgegebenen Signale, **dadurch gekennzeichnet,** daß er einen auf UV-Strahlung ansprechenden flächenhaften, bildgebenden Sensor (5) und eine Bildverarbeitungsstufe (7) zur Erzeugung von Nutzsignalen enthält, wobei das System (7) ein elektrooptisches System ist, dessen Komponenten bezüglich Zeitdauer und Einschaltzeitpunkt im Takt aufeinander abgestimmt sind, besonders bei Kurzzeitbelichtung, hinsichtlich Intensität, Form, Größe und Richtung des Bildfeldes und daß zur Bildauswertung die Ausgangssignale von der Bildauslesestufe über eine Schnittstelle einem Rechner zugeführt werden, der sie mit gespeicherten vorbekannten Mustern bestimmter spektraler Signatur vergleicht, zur sicheren Erkennung und/oder Plausibilitätskontrolle.

2. System nach Anspruch 1, **gekennzeichnet** durch eine Bildverarbeitung, bei der aus einem ursprünglichen Grauwertbild ein solches in Binärform z.B. hell/dunkel gewonnen wird.

3. System nach Anspruch 1 oder 2, **dadurch gekennzeichnet,** daß nach der Bildverarbeitung computergestützt eine Warnung insbesondere vor anfliegenden Flugkörpern oder eine Bedrohungsanalyse in Quasi-Echtzeit erstellt wird.

4. System nach Anspruch 3, **gekennzeichnet** durch die computergestützte Erzeugung eines Entscheidungsmenues für Gegenmaßnahmen als Antwort auf die Bedrohung in Quasi-Echtzeit.

5. System nach Anspruch 4, **dadurch gekennzeichnet,** daß die Gegenmaßnahmen auf die Bedrohung automatisch oder halbautomatisch eingeleitet werden.

6. System nach Anspruch 1, **dadurch gekennzeichnet,** daß für den flächenhaften, bildgebenden Sensor (5), der auf UV-Strahlung anspricht und der Erzeugung von Nutzsignalen in Binärform, die von der UV-Strahlung über Eingangsoptik (1), Bildwandler (2), Bildverstärker (3) und Bildausleseeinheit (4) elektronisch gewonnenen Bildinformationen einer Schnittstelle einer digitalen getakteten Bildverarbeitungs- und Bildauswertestufe mit Rechner und Musterspeicher zum Vergleich zugeführt wird, wobei die von dieser Stufe erzeugten Nutzsignale über Schnittstellen einer Anzeigeeinheit (8) zugeführt oder zur Auslösung von Gegenmaßnahmen manuell, halb- oder vollautomatisch weiterverwendet werden.

7. System nach Anspruch 6, **dadurch gekennzeichnet,** daß die Eingangsoptik (1), das Bild vom UV bis nahen IR-Bereich mit hoher Auflösung transmittiert.

8. System nach einem der Ansprüche 6 oder 7, **dadurch gekennzeichnet,** daß ein elektrooptischer Teil des Erkennungssystems in der Einstrahlrichtung vor der Photokathode Filter und variable Blenden aufweist, die nur gewünschte Spektralbereiche zur Bildwandlerstufe durchlassen.

9. System nach einem der Ansprüche 6 bis 8, **dadurch gekennzeichnet,** daß der elektrooptische Teil des Erkennungssystems eine Photokathode aufweist, die in ihrer Zusammensetzung auf den Spektralbereich der einfallenden UV-Strahlung abgestimmt ist.

10. System nach einem der Ansprüche 6 bis 9, **dadurch gekennzeichnet,** daß der elektrooptische Teil des Erkennungssystems eine oder mehrere Elektronenvervielfacherstufen aufweist.

11. System nach einem der Ansprüche 6 bis 10, **dadurch gekennzeichnet,** daß im elektrooptischen Teil des Erkennungssystems die Ankoppelung des Bildauslesedetektors an die letzte Elektronenvervielfacherstufe direkt oder über einen Leuchtschirm/Faseroptik erfolgt.

12. System nach einem der Ansprüch 6 bis 11, **dadurch gekennzeichnet,** daß der Bildauslesedetektor als Flächendetektor ein CCD mit einer Vielzahl von Pixeln aufweist.

13. System nach einem der Ansprüche 6 bis 12, **gekennzeichnet** durch eine elektronische Intervallschaltung zur Taktung von Photokathode, Elektronenvervielfacher und/oder CCD d.h. eine Kurzzeitbelichtung zur Verbesserung des Signal/Rauschverhältnisses und/oder des Blendschutzes.

14. System nach einem der Ansprüche 6 bis 13, **dadurch gekennzeichnet,** daß das Erkennungssystem zusätzlich einen UV-empfindlichen Punktsensor d.h. einen Einzeldetektor aufweist, dessen Ausgangssignal zur Regelung von Blende, Filter und Taktzeit des elektrooptischen Teils des Erkennungssystems dient.

15. System nach einem der Ansprüche 6 bis 14, **dadurch gekennzeichnet,** daß der elektrooptische Teil des Erkennungssystems durch eine Taktung nur an vorher festgelegten Zeiten aktiv ist, insbesondere innerhalb der Belichtungzeit, welche die Bildfolgefrequenz des Erkennungssystems zuläßt.

16. System nach einem der vorhergehenden Ansprüche, **dadurch gekennzeichnet,** daß das Erkennungssystem zusätzlich einen Schwingungs-, und/oder Lage-, und/oder Beschleunigungssensor aufweist, wobei insbesondere dessen Ausgangssignal der Steuerung des Taktens dient und zur Vibrationsunterdrückung am Erkennungssystem führt.

17. System nach einem der vorhergehenden Ansprüche, **dadurch gekennzeichnet,** daß durch eine Regelschaltung im Erkennungssystem bei Erkennung eines Objekts das Gesichtsfeld des elektrooptischen Teils derart verändert wird, daß die Analyse von Form, Helligkeit, Größe und Bewegung des Objekts in die Bedrohungsanalyse verbessert miteinbezogen werden kann.

18. System nach einem der vorhergehenden Ansprüche, **dadurch gekennzeichnet,** daß der elektrooptische Teil des Erkennungssystems mehrere Sensoren zum Abdecken eines großen Raumwinkels d.h. eines Gesichtsfeldes zur Rundumsicht, zusammengesetzt enthält.

19. System nach einem der vorhergehenden Ansprüche, **dadurch gekennzeichnet,** daß das Erkennungssystem Sensoren aufweist, die zusätzlich zum UV auch den sichtbaren Spektralbereich und ggf. auch den diesem nahen IR-Bereich erfassen können.

20. System nach einem der vorhergehenden Ansprüche, **dadurch gekennzeichnet,** daß bei Einsatz mehrerer Sensoren nur die änderungsrelevanten Teile der Bildinhalte zur Bedrohungsanalyse und Weiterverarbeitung verwendet werden.

21. System nach einem der vorhergehenden Ansprüche, **dadurch gekennzeichnet,** daß sie im Weltraum, insbesondere bei Beobachtungssatelliten angewandt wird.

22. System nach Anspruch 21, **dadurch gekennzeichnet,** daß die Beobachtungssatelliten Teil eines computergestützten Warnsystems sind, das bedrohende Objekte wie Flugkörper schon bei Start oder kurz danach im Anflug erkennt.

23. System nach einem der vorhergehenden Ansprüche, **dadurch gekennzeichnet,** daß im Erkennungssystem ein rotierendes Filterrad zur gleichzeitigen Quasi-Echzeitdarstellung des Zielgebietes bei Start oder Anflug in verschiedenen Wellenlängenbereichen vorgesehen ist, das mit der Bildauslesung hinsichtlich Rotationsgeschwindigkeit verknüpft ist.

24. System nach einem der vorhergehenden Ansprüche, **dadurch gekennzeichnet,** daß sich vor der Eingangsoptik des unter anderem UV-empfindlichen Sensors ein optisches Element befindet, das die betrachtete Szene in der Bildfeldebene mehrfach darstellt, wobei die Darstellung gleichzeitig jeweils in einem anderen spektralen Fenster erfolgt.

25. System nach einem der vorhergehenden Ansprüche, **dadurch gekennzeichnet,** daß das optische Element des unter anderem UV-empfindlichen Sensors aus einer Prismenanordnung und/oder einer Spiegel-Strahlteileanordnung und/oder einer Linsenanordnung, wie Tricklinse, besteht, die spektralselektive Transmissionseigenschaften aufweist, sodaß die betrachtete Szene gleichzeitig in mehreren Wellenlängenbereichen, insbesondere in UV, VIS, IR oder Grün/Rot/Blau abgebildet wird.

26. System nach einem der vorhergehenden Ansprüche, **dadurch gekennzeichnet,** daß sie eine Bildaufbereitungs- und Auswerteschaltung aufweist, bei der die Bildverarbeitung spektralselektiv, dynamisch und in Echtzeit erfolgt, in dem die Bildinhalte bezüglich ihrer Form, Bewegungsdynamik, ihres Intensitätsverlauf und ihrer örtlichen Zuordnung innerhalb der verschiedenen spektralen Fenster ausgewertet werden.

27. System nach einem der vorhergehenden Ansprüche, **dadurch gekennzeichnet,** daß sie einen bildgebenden CCD-Sensor großer Dynamik enthält, der in einem weiten Spektralbereich, UV bis nahes IR, empfindlich ist, dessen Bildinhalte einem Bildverarbeitungs-, Aufbereitungs- und Auswerterechner zugeführt werden, der aufgrund der in ihm gespeicherten Auswertealgorithmen die Bildinhalte dahingehend analysiert, daß vorbekannte Objekt- bzw. Flugkörper Strahlungs- und -Bewegungseigenschaften zu einer eindeutigen, fehlerfreien Ortung und Erkennung, insbesondere auf der gesamten Flugbahn, durch Analyse der Bildinhalte führen.

## Claims

1. System for the detection of take-off or approach of objects by way of their fire or their exhaust plumes, so-called plume signature, by means of radiation detectors (5) for a specified spectral range and electronic signal processing and evaluation circuit for signals delivered from the detector into the circuit, **characterised in that** it comprises a plane imaging sensor (5) which responds to UV radiation and an image-processing stage (7) for producing intelligence signals, wherein the system (7) is an electro-optical system the components of which are pulse-synchronized relative to temporal duration and switch-on time, in particular for short-term exposure, relative to intensity, form, dimension and direction of the image field, and that for the purpose of image evaluation the output signals are delivered from the image-selector stage via an interface to a computer, which compares them to stored previously known patterns of specified spectral signatures for reliable detection and/or plausibility control.

2. System according to claim 1, **characterised by** image processing which produces from an originally grey-shade image an image in binary form, for example light/dark.

3. System according to claim 1 or 2, **characterised in that** a computer-supported warning, in particular of approaching missiles, or a threat analysis in quasi real time is given after image processing.

4. System according to claim 3, **characterised by** computer-supported production of a decision menu for counter measures in response to a threat in quasi real time.

5. System according to claim in, **characterised in that** the counter measures in response to a threat are automatically or semi-automatically initiated.

6. System according to claim 1, **characterised in that** for the plane imaging sensor (5), which responds to UV radiation, and the production of intelligence signals in binary form, image information obtained from the UV radiation via input optic (1), image converter (2), image intensifier (3) and image selector unit (4), electronically obtained image information is fed via an interface to a digitally pulsed image processing and image evaluating stage with computer and specimen memory for the purpose of comparison, in which respect intelligence signals produced by this stage are fed via interfaces to a display unit (8) or are manually, semi- or fully automatically utilized for initiating counter-measures.

7. System according to claim 6, **characterised in that** the input optic (1) transmits an image between UV and near IR range with high resolution.

8. System according to one of claims 6 or 7, **characterised in that** an electro-optical portion of the detection system comprises in front of the photo cathode, as seen in the input direction, filters and variable diaphragms which pass only wanted spectral ranges to the image-converter stage.

9. System according to one of claims 6 to 8, **characterised in that** the electro-optical portion of the detection system comprises a photo cathode which is in its composition suited to the spectral range of incoming UV radiation.

10. System according to one of claims 6 to 9, **characterised in that** the electro-optical portion of the detection system comprises one or several electron-multiplier stages.

11. System according to one of claims 6 to 10, **characterised in that** in the electro-optical portion of the detection system coupling of the image-selector detector to the last electron-multiplier stage is either direct or via a luminescent screen/fibre optics.

12. System according to one of claims 6 to 11, **characterised in that** the image-selector detector is a plane detector with a CCD and a plurality of pixels.

13. System according to one of claims 6 to 12, **characterised by** an electronic interval circuit for pulsing a photo cathode, electron multiplier and/or CCD, i.e. short-time exposure, for improving the signal/noise ratio and/or for glare protection.

14. System according to one of claims 6 to 13, **characterised in that** the detection system additionally comprises a UV-sensitive coordinate sensor, i.e. a single detector, the output signal of which serves the control of diaphragm, filter and pulse of the electro-optical portion of the detection system .

15. System according to one of claims 6 to 14, **characterised in that** the electro-optical portion of the detection system is only active by pulsing at previously set times, in particular within an exposure period, which admits the image-sequence frequency of the detection system.

16. System according to one of the above claims, **characterised in that** the detection system additionally comprises an oscillation- and/or position- and/or acceleration sensor, wherein in particular its output signal serves the pulse control and causes suppression of vibration at the detection system.

17. System according to one of the above claims, **characterised in that** on detection of an object a control circuit in the detection system changes the viewing field of the electro-optical portion in such a manner that inclusion of the analysis of form, brightness, dimension and movement of an object into the threat analysis can be improved.

18. System according to one of the above claims, **characterised in that** the electro-optical portion of the detection system comprises a plurality of sensors to cover a large spatial angle, i.e. a viewing field for allround vision.

19. System according to one of the above claims, **characterised in that** the detection system comprises sensors which can detect, in addition to UV, the visible spectral range and, if appropriate, its near IR range.

20. System according to one of the above claims, **characterised in that** with the use of a plurality of sensors only those portions of image content which are relevant to changes are utilized for threat analysis and further processing.

21. System according to one of the above claims, **characterised in that** it is used in outer space, in particular with observation satellites.

22. System according to claim 21, **characterised in that** observation satellites are part of a computer-supported warning system which detects threatening objects such as missiles as early as during their take-off or shortly thereafter on approach.

23. System according to one of the above claims, **characterised in that** the detection system is provided with a rotating filter wheel for simultaneous quasi real time representation of a target area during take-off or approach in different wavelength ranges, which is connected to the image readout with respect to the speed of rotation.

24. System according to one of the above claims, **characterised in that** in front of the input optic of a sensor which is also UV sensitive is located an optical element which images an observed scene in the image-field plane several times, in which respect the image is simultaneously displayed in another spectral window.

25. System according to one of the above claims, **characterised in that** the optical element of the sensor which is also UV sensitive is composed of a prism arrangement and/or a mirror beam-splitter arrangement and/or a lens arrangement, such as a trick lens, having spectral-selective transmission properties, so that an observed scene is imaged simultaneously in a plurality of wavelength ranges, in particular in UV, VIS, IR or green/red/blue).

26. System according to one of the above claims, **characterised in that** it comprises an image processing and evaluation circuit wherein image processing is spectral-selective, dynamic and in real time, wherein image contents are evaluated relative to their form, movement dynamics, intensity course and their spatial association within the different spectral windows.

27. System according to one of the above claims, **characterised in that** it comprises an imaging CCD sensor of large dynamics, which is sensitive in a wide spectral range, UV to near IR, the image contents of which are fed to an image processing, preparation and evaluation computer, which analyses based on therein stored evaluation algorithms image contents so that previously known movement characteristics of objects, for example missiles, lead to error-free location and recognition, in particular in the entire trajectory, by way of analysis of image contents.

## Revendications

1. Système de détection et de reconnaissance du lancement et de l'approche d'objets par leur flamme ou leur jet de gaz brûlés - la dite "signature de la trace" - utilisant des détecteurs de rayonnement (5) adaptés à une plage spectrale déterminée et un circuit électronique de traitement et d'exploitation des signaux délivrés par le détecteur, caractérisé par le fait qu'il comporte un détecteur (5) de création d'image en matrice qui réagit à l'ultraviolet ainsi qu'un étage de traitement d'image (7) pour la production de signaux utiles, le système (7) étant un système électro-optique dans lequel les composants sont synchronisés entre eux du point de vue de la durée et de l'instant de déclenchement et, particulièrement dans le cas d'exposition de courte durée, sur le plan de l'intensité, de la forme, de la taille et de la direction du champ d'image, ainsi que par le fait que pour l'exploitation de l'image, on envoie à un calculateur, par l'intermédiaire d'une interface, les signaux de sortie de l'étage de création d'image, lequel calculateur compare lesdits signaux avec des modèles connus mémorisés de signatures spectrales déterminées à des fins de reconnaissance sûre et/ou de contrôle de plausibilité.

2. Système selon la revendication 1, caractérisé par un traitement d'image par lequel on obtient, à partir d'une image originale en dégradés de gris, une image sous forme binaire par exemple clair/foncé.

3. Système selon la revendication 1 ou 2, caractérisé par le fait qu'après traitement de l'image, on produit un signal d'avertissement ou on procède à une analyse par ordinateur, en temps quasi-réel, de la menace.

4. Système selon la revendication 3, caractérisé par la production par ordinateur, en temps quasi-réel, d'un menu de décision pour des contre-mesures en réponse à la menace.

5. Système selon la revendication 4, caractérisé par le fait que les contre-mesures à la menace sont déclenchées de manière automatique ou semi-automatique.

6. Système selon la revendication 1, caractérisé par le fait que pour produire des signaux utiles de forme binaire, les informations d'image obtenues par des moyens électroniques à partir du rayonnement UV capté par le détecteur (5) de création d'image en matrice, par l'intermédiaire d'une optique d'entrée (1), d'un convertisseur d'image (2), d'un amplificateur d'image (3) et d'une unité de création d'image (4), sont envoyées à des fins de comparaison à une interface d'un étage numérique synchronisé de traitement et d'exploitation d'image comportant un calculateur et une mémoire de modèles, les signaux utiles produits par cet étage étant envoyés par l'intermédiaires d'interfaces à une unité d'affichage (8) ou étant utilisés pour déclencher manuellement, de manière automatique ou automatique des contre mesures.

7. Système selon la revendication 6, caractérisé par le fait que l'optique d'entrée (1) transmet avec une résolution élevée l'image de la plage UV jusqu'à l'infra-rouge proche.

8. Système selon l'une des revendications 6 ou 7, caractérisé par le fait qu'un élément électro-optique du système de détection et de reconnaissance comporte des filtres et des diaphragmes variables qui sont disposés devant la photocathode, vu dans la direction d'entrée du rayonnement, et ne laissent arriver à l'étage de transformation d'image que les plages spectrales souhaitées.

9. Système selon l'une des revendications 6 à 8, caractérisé par le fait que l'élément électro-optique du système de détection et de reconnaissance comporte une photocathode dont la composition est adaptée au domaine spectral du rayonnement UV reçu.

10. Système selon l'une des revendications 6 à 9, caractérisé par le fait que l'élément électro-optique du système de détection et de reconnaissance comporte un ou plusieurs étages multiplicateurs d'électrons.

11. Système selon l'une des revendications 6 à 10, caractérisé par le fait que le couplage du détecteur de création d'image au dernier étage multiplicateur d'électrons dans l'élément électro-optique est direct ou est réalisé par l'intermédiaire d'un écran luminescent/d'une fibre optique.

12. Système selon l'une des revendications 6 à 11, caractérisé par le fait que le système de détection et de reconnaissance comporte comme détecteur en matrice un dispositif de couplage de charge (CCD) avec une pluralité de pixels.

13. Système selon l'une des revendications 6 à 12, caractérisé par un circuit d'horloge électronique destiné à la synchronisation de la photocathode, du multiplicateur d'électrons et/ou du dispositif de couplage de charge (CCD), c'est-à-dire une exposition de courte durée, afin d'améliorer le rapport signal/bruit et/ou lefficacité du diaphragme.

14. Système selon l'une des revendications 6 à 13, caractérisé par le fait que le système de détection et de reconnaissance comporte en outre un détecteur ponctuel sensible à l'ultraviolet, c'est-à-dire un détecteur isolé dont le signal de sortie est utilisé pour le réglage du diaphragme, du filtre et de la synchronisation de l'élément électro-optique du système de détection et de reconnaissance.

15. Système selon l'une des revendications 6 à 14, caractérisé par le fait qu'un dispositif de synchronisation active l'élément électro-optique du système de détection et de reconnaissance à des instants prédéterminés, en particulier pendant l'intervalle d'exposition, que permet la fréquence de succession d'images du système de détection et de reconnaissance.

16. Système selon l'une des revendications précédentes, caractérisé par le fait que le système de détection et de reconnaissance comporte en outre un capteur de vibration et/ou un capteur de position et/ou capteur d'accélération, dont le signal de sortie est utilisé pour la commande de la synchronisation et contribue à l'atténuation des vibrations dans le système de détection et de reconnaissance.

17. Système selon l'une des revendications précédentes, caractérisé par le fait qu'un circuit de régulation du système de détection et de reconnaissance modifie le champ optique de l'élément électro-optique lors de la détection d'un objet de manière à permettre une meilleure intégration de l'analyse de la forme, de la luminosité, de la taille et du déplacement de l'objet dans l'analyse de la menace.

18. Système selon l'une des revendications précédentes, caractérisé par le fait que l'élément électro-optique du système de détection et de reconnaissance comporte plusieurs détecteurs qui sont combinés de manière à couvrir un angle dans l'espace important, c'est-à-dire un champ optique important, pour une surveillance panoramique.

19. Système selon l'une des revendications précédentes, caractérisé par le fait que le système de détection et de reconnaissance comporte des détecteurs qui peuvent détecter outre l'ultraviolet, le domaine visible du spectre et, le cas échéant, le domaine infrarouge proche de ce dernier.

20. Système selon l'une des revendications précédentes, caractérisé par le fait que, lorsqu'on utilise plusieurs capteurs, seules les composantes sujettes à variation de l'image sont prises en compte pour l'analyse de la menace et le traitement.

21. Système selon l'une des revendications précédentes, caractérisé par le fait qu'il est appliqué dans l'espace, notamment sur des satellites d'observation.

22. Système selon la revendication 21, caractérisé par le fait que les satellites d'observation font partie d'un système de surveillance basé sur des ordinateurs qui détecte et reconnaît dès leur lancement ou au cours du vol d'approche, immédiatement après lancement, des objets qui constituent une menace, comme par exemple des missiles.

23. Système selon l'une des revendications précédentes, caractérisé par le fait qu'il est prévu dans le système de détection et de reconnaissance un filtre circulaire rotatif pour la représentation simultanée en temps quasi-réel, dans différentes plages de longueur d'onde, de la zone de la cible au moment du lancement ou de l'approche, lequel filtre est couplé du point de vue de la vitesse de rotation au dispositif de création d'image.

24. Système selon l'une des revendications précédentes, caractérisé par le fait qu'un élément optique est placé devant l'optique d'entrée du détecteur sensible notamment aux ultraviolets, lequel élément optique reproduit la scène observée plusieurs fois dans le plan du champ d'image, la reproduction ayant lieu simultanément dans des fenêtres spectrales différentes.

25. Système selon l'une des revendications précédentes, caractérisé par le fait que l'élément optique du détecteur sensible entre autres aux ultraviolets est constitué par un système de prismes et/ou un système miroir-diviseur de rayon et/ou un système de lentilles, tel que des lentilles à effets spéciaux, qui présente des caractéristiques de transmission sélective, de sorte que la scène observée est reproduite simultanément dans différentes plages de longueur d'ondes en particulier UV, visible, IR ou vert/rouge/bleu.

26. Système selon l'une des revendications précédentes, caractérisé par le fait qu'il comporte un circuit de traitement et d'exploitation d'image dans lequel l'image est traitée de manière sélective, de manière dynamique et en temps réel, et dans lequel les images sont exploitées du point de leur forme, de leur dynamique de déplacement, de leur courbe d'intensité et de leur disposition dans l'espace dans les différentes fenêtres.

27. Système selon l'une des revendications précédentes, caractérisé par le fait qu'il comporte un détecteur CCD de création d'image à dynamique élevée qui est sensible dans un large domaine du spectre, de l'UV à l'IR, dont les images sont envoyées à un calculateur de traitement, de préparation et d'exploitation d'image qui analyse les images en utilisant des algorythmes d'exploitation contenus dans une mémoire, de sorte que des caractéristiques de rayonnement et de déplacement connues d'objets ou de missiles permettent, par analyse des contenus d'image, une localisation et une reconnaissance exactes, en particulier sur l'ensemble de la trajectoire.
